# EUROPÄISCHE PATENTSCHRIFT

(11) **EP 0 579 933 B1**
(45) Veröffentlichungstag und Bekanntmachung des Hinweises auf die Patenterteilung: **08.01.1997**
(21) Anmeldenummer: 93108647.4
(22) Anmeldetag: 28.05.1993
(51) Int. Cl.: F24H 1/20, F24D 10/00, F24D 1/00

(54) **Verfahren zur Brauchwassererwärmung sowie Warmwasserbereiter zur Durchführung des Verfahrens**
Method of heating domestic water and water heater for carrying out the method
Procédé pour le chauffage d'eau sanitaire et chauffé-eau pour la mise en oeuvre du procédé

(30) Priorität: 21.07.1992 DE 4223959
(43) Veröffentlichungstag der Anmeldung: 26.01.1994
(73) Patentinhaber: W. BÄLZ & SOHN GMBH & CO., W-74076 Heilbronn (DE)
(72) Erfinder: Düsselberg, Hartwig, D-7901 Staig (DE)
(74) Vertreter: Rüger, Rudolf, Dr.-Ing.

(56) Entgegenhaltungen:
- DE-A- 3 041 982
- DE-C- 824 247
- US-A- 3 633 658

## Beschreibung

Gegenstand der Erfindung sind ein Verfahren zur Brauchwassererwärmung nach dem Oberbegriff des Patentanspruches 1 sowie ein Warmwasserbereiter gemäß dem Oberbegriff des Patentanspruches 5.

In der Praxis werden in Dampfheizungsanlagen zur Bereitstellung von Warmwasser, bspw. als Brauchwasser für sanitäre Zwecke, Warmwasserbereiter verwendet, die in einem Brauchwasserbehälter einen gewissen Wasservorrat bereithalten, der dem Ausgleich von Belastungsspitzen dient. In dem Brauchwasserbehälter ist als Wärmequelle ein Warmwasserheizbündel angeordnet, wobei das Brauchwasser maximal die Temperatur des zum Heizen verwendeten Warmwassers erreichen kann. Dabei wird das benötigte Warmwasser zunächst in einem dampfbeheizten Wärmetauscher erwärmt. Um eine lediglich geringe Temperaturspreizung zwischen dem meist gelöste Salze enthaltenden Brauchwasser und einem innerhalb des Vorratsbehälters angeordneten Warmwasserheizbündel zu erhalten und damit die Verkrustung desselben zu begrenzen, liegt die Temperatur des Warmwassers nicht wesentlich über der Solltemperatur des Brauchwassers.

Aufgrund der geringen Temperaturdifferenz kann die zum Aufheizen des Brauchwassers erforderliche Zeit unerwünscht groß werden.

Aus der DE-A 3 041 982 ist ein Brauchwasserspeicher bekannt, der zwei auf unterschiedlichen Temperaturen gehaltene Warmwasserheizbündel aufweist. Ein erstes Warmwasserheizbündel ist in einem bodennahen Bereich angeordnet und mit Warmwasser geringer Vorlauftemperatur beaufschlagt. Ein zweites, direkt darüber angeordnetes Warmwasserheizbündel ist mit heißem Vorlaufwasser beaufschlagt. Es wird eine Temperaturschichtung erzeugt, so daß das erstgenannte kältere Heizbündel in einem Kaltwasserbereich steht. Es dient dem Auskühlen von Rücklaufwasser.

Die Heizbündel sind nicht für Dampfbetrieb vorgesehen.

Aus der US-A-3 633 658 ist ein Warmwasserboiler bekannt, der über einen kondensatbeheizten Durchlauferhitzer erwärmt wird. Der Durchlauferhitzer sitzt in einem unteren Bereich des Boilers und wird durch ein die Wandung durchgreifendes waagerechtes Rohr größeren Durchmessers gebildet, indem U-förmig gebogene, Prallplatten tragende Rohre angeordnet sind, die von Kondensat durchflossen sind. Über eine Pumpeinrichtung wird in dem Boiler stehendes Wasser in stetigem Kreislauf an den U-förmig gebogenen Rohren vorbei nach außen abgesaugt und dem Boiler in einem oberen Bereich wieder zugeführt. Zum Nachheizen von aus dem Boiler entnommenen Wasser ist ein zweiter Durchlauferhitzer vorgesehen, der mit Dampf beheizt ist. Dieser dient nicht der Beheizung des in dem Boiler vorhandenen, sondern lediglich zur Beheizung des ausfließenden Wassers.

Davon ausgehend ist es Aufgabe der Erfindung, ein Verfahren zur Brauchwassererwärmung anzugeben, mit dem eine schnelle Erwärmung von Brauchwasser bei einer guten Energieausbeute erreichbar ist. Außerdem ist es Aufgabe der Erfindung, einen Warmwasserbereiter zu schaffen, der die schnelle Aufheizung von Brauchwasser ermöglicht, der einer geringen Verkrustung unterliegt und der gleichzeitig eine gute Ausnutzung der Wärmeenergie des betreffenden Heizmediums gestattet.

Die vorstehend genannte Aufgabe wird durch das Verfahren nach den Merkmalen des kennzeichnenden Teiles des Patentanspruchs 1 sowie einen Warmwasserbereiter mit den Merkmalen des kennzeichnenden Teils des Patentanspruchs 5 gelöst.

Durch die Temperaturschichtung und die Erzeugung eines kälteren und eines wärmeren Bereiches kann selbst Warmwasser mit lediglich geringerem Wärmeinhalt noch zur Erwärmung von Brauchwasser genutzt werden. Außerdem wird die Wärmemenge, die von dem Dampf aufgebracht werden muß verringert.

Wenn als Warmwasser Restwärme tragendes Kondensat verwendet wird, ist auf einfache Weise die Nutzung von Abwärme ermöglicht. Es kann dabei ohnehin vorhandenes Ferndampfleitungsentwässerungskondensat verwendet werden.

Es ergibt sich eine gute Energieausbeute, wenn gleichfalls das durch den kondensierenden Dampf entstehende Kondensat zum Erwärmen des Brauchwassers Verwendung findet und somit in dem entsprechenden Warmwasserbereiter weit ausgekühlt wird.

Durch die Anordnung zweier Heizbündel in dem Innenraum, nämlich des Dampfheizbündels und des Warmwasserheizbündels, wird das Brauchwasser in einem zweistufigen Prozeß erwärmt. Die Temperaturspreizung zwischen dem Brauchwasser und dem jeweiligen Heizbündel bleibt dadurch jeweils relativ gering. Deshalb lagern sich wenig oder keine Salze aus dem Brauchwasser als Kruste auf dem Dampfheizbündel ab.

Erst die Verbindung der Heizwirkung des Warmwasserheizbündels mit der des Dampfheizbündels ermöglicht die Nutzung des Wärmeinhaltes des in Dampfanlagen ohnehin anfallenden Kondensates. Umgekehrt gestattet erst die Vorwärmung des Brauchwasser durch die Restwärme des Kondensats den Einsatz eines Dampfheizbündels zur Brauchwassererwärmung. Durch die Beheizung des Warmwasserbereiters mit Dampf und Kondensat, wird ansonsten zum Heizen benötigtes Warmwasser völlig ersetzt. Bei der Einbindung in ein Dampfsystem kann auf die gebräuchlichen Systemelemente zurückgegriffen werden.

Das in dem Innenraum angeordnete, mit dem Brauchwasser in Berührung stehende Dampfheizbündel bewirkt eine schnelle Erwärmung von in den Brauchwasserbehälter eingeströmten Kaltwasser, wenn dem Warmwasserbereiter über längere Zeit hinweg größere Mengen Brauchwasser entnommen werden. Dadurch kann der betreffende Brauchwasserbehälter relativ klein ausgelegt werden.

Die Regeleinrichtung steuert den Wärmeeintrag in den Brauchwasserbehälter. Vorzugsweise wird beim Erreichen der Solltemperatur das Dampfheizbündel mit Kondensat geflutet und dadurch der von dem Dampfheizbündel verursachte Wärmeeintrag vermindert bzw. unterbunden. Die Regeleinrichtung erlaubt außerdem das Einstellen einer maximalen Kondensattemperatur an der Kondensatableitung, so daß das Kondensat gut ausgekühlt und die dem Dampf innewohnende Energie gut ausgenutzt wird.

Wenn das Warmwasserheizbündel an eine Ferndampfleitungsentwässerung angeschlossen ist, die den Warmwasservorlauf darstellt, kann die in dem Kondensat enthaltene Restenergie auf einfache Weise zur Warmwasserbereitung genutzt werden.

Wenn das Dampfheizbündel und das Warmwasserheizbündel in einem bezogen auf die Wirkungsrichtung der Schwerkraft unteren Teil des Innenraumes des Brauchwasserbehälters angeordnet sind, wird eine gute Erwärmung des Brauchwasservorrates erreicht.

Wenn das Dampfheizbündel oberhalb des Warmwasserheizbündels angeordnet ist, kommt mit dem zufließenden Kaltwasser immer zuerst das Warmwasserheizbündel in Berührung, wodurch eine besonders gute Auskühlung des in dem Warmwasserheizbündel geführten Kondensats erreicht wird. Es ergibt sich in dem Brauchwasserbehälter eine Wärmeschichtung, bei der das Dampfheizbündel von vorgewärmten Brauchwasser umgeben ist. Das Warmwasserheizbündel befindet sich in dem kalten Bereich, so daß das Entwässerungskondensat ausgekühlt werden kann.

Wenn der oberhalb des Dampfheizbündels gelegene Abschnitt des Innenraumes den größten Teil des Gesamtvolumens des Innenraumes ausmacht, steht ein vergleichsweise großes Brauchwasservolumen mit bereits erwärmten Brauchwasser zum Ausgleich von Belastungsspitzen bereit.

Der Wärmeübergang von den Heizbündeln auf das Brauchwasser wird verbessert, wenn der Brauchwasserbehälter unterhalb halber Höhe bei dem Dampfheizbündel einen Anschluß aufweist, der über eine Zirkulationspumpe mit dem Warmwasseranschluß verbunden ist.

Wenn das Dampfheizbündel mehrere im wesentlichen senkrecht stehende Übertragungsrohre enthält, die als Rohrschlangen ausgebildet sind, kommt ein guter Wärmeaustausch zwischen dem kondensierenden Dampf und dem Brauchwasser zustande. Die Regelung über Kondensatanstau wird ermöglicht, wenn die Übertragungsrohre im wesentlichen senkrecht stehend angeordnet sind. Das Kondensat steht unter Dampfdruck, so daß keinerlei Pumpen oder Sammelgefäße zum Rückführen des Kondensats erforderlich sind. Durch die Aufrechterhaltung des Druckes in dem Kondensat werden Klopfgeräusche auf der Kondensatseite vermieden. Das Dampfheizbündel ist in allen Betriebszuständen zum überwiegenden Teil und im Bedarfsfalle bis zu 100% mit Kondensat geflutet. Dadurch können die Wärmeverluste gesenkt werden. Das in dem Dampfheizbündel verbleibende Dampfvolumen ist gering. Eine unerwünschte Nacherwärmung des Brauchwassers durch in dem Dampfheizbündel kondensierenden Dampf tritt aufgrund des geringen Dampfvolumens kaum auf.
Wenn das Dampfheizbündel über den Halsstutzen herausnehmbar in dem Brauchwasserbehälter angeordnet ist, ist das Auswechseln des Warmwasserheizbündels zu Heizzwecken erleichtert.

Wenn das zu der Regeleinrichtung gehörige Ventil ein Kondensatventil ist, das in der Kondensatableitung liegt und das von einem Stellmotor betätigt ist, kann die Heizleistung des Dampfheizbündels auf einfache Weise durch Kondensatanstau geregelt werden. Zum Erwärmen des Brauchwassers wird in Vorrangschaltung das kondensatführende Warmwasserheizbündel genutzt. Dadurch ist der Dampfverbrauch verringert.

Die Regeleinrichtung kann einen Sollwerttemperaturfühler aufweisen, der etwa auf halber Höhe des Brauchwasserbehälters angeordnet ist, und der mit dem Regelventil verbunden ist. Er gibt ein erstes Steuersignal zur Steuerung des Regelventiles ab. Außerdem kann in der Kondensatableitung zwischen dem Regelventil und dem Dampfheizbündel ein Thermostattemperaturfühler angeordnet sein, der ein zweites Steuersignal zur Steuerung des Elektromotors liefert. Bei entsprechender Einstellung dieses Thermostattemperaturfühlers kann eine weitgehende Auskühlung des aus dem Dampfheizbündel abgeleiteten Kondensats erreicht werden, wodurch eine gute Energieausbeute erzielt wird.

Zur Reduzierung des Wärmeeintrags in den Warmwasserbereiter kann der Warmwasservorlauf über einen Pfad eines motorgesteuerten Zweiwegeventiles und ein Umgehungsrohr mit der den Rücklauf bildenden Leitung verbunden sein.

Um den Wärmeeintrag in den Warmwasserbereiter nach Erreichen oder Überschreiten der Solltemperatur ganz zu unterbinden, kann die Regeleinrichtung im oberen Bereich des Brauchwasserbehälters einen Temperaturwächter aufweisen, der das Zweiwegeventil steuert, so daß beim Überschreiten der Grenztemperatur an dem Temperaturwächter das Umgehungsrohr zwischen Warmwasservorlauf und Rücklauf freigegeben ist.

Wenn der obere Bündelblockflansch über ein Dampfventil mit der Dampfleitung verbunden ist, kann eine von der Regeleinrichtung unabhängige Schutzeinrichtung geschaffen werden, die den Warmwasserbereiter gegen Überhitzung des Brauchwassers sowie bei Ausfall der Elektroenergieversorgung oder der Wasserversorgung schützt. Eine einfache Lösung dafür ergibt sich, wenn das Dampfventil ein druckbetätigtes Ventil ist, das mit dem Stadtwassernetz über ein elektrisch betätigtes Steuerventil in Verbindung steht, das seinerseits von einem Sicherheitstemperaturbegrenzer gesteuert ist. Eine Erhöhung der Sicherheit wird erreicht, wenn der Temperaturfühler ein Sicherheitstemperaturbegrenzer ist, der mit einem entsprechenden Werkzeug entriegelt werden muß, wenn er einmal selbsttätig abgeschaltet hat.

In der einzigen Figur der Zeichnung ist ein Ausführungsbeispiel der Erfindung dargestellt. Es zeigt:

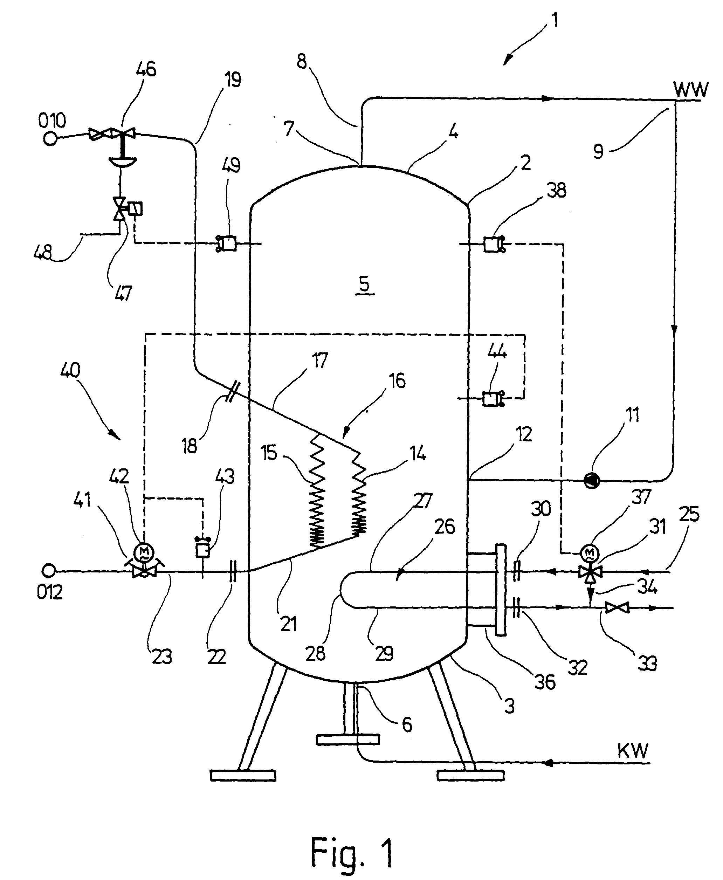

- Fig. 1: einen dampfbeheizten Warmwasserbereiter in einer schematischen Darstellung.

Das Verfahren wird mit einem in Fig. 1 dargestellten Warmwasserbereiter 1 durchgeführt. Der Warmwasserbereiter 1 weist einen wärmeisolierten Brauchwasserbehälter 2 auf, der die Form eines aufrechtstehenden Zylinders mit einem nach unten gewölbten Boden 3 sowie mit einer leicht nach außen gewölbten Wandung 4 an der Oberseite hat. Der Brauchwasserbehälter 2 umschließt einen Innenraum 5, der zum Speichern von Brauchwasser dient. Etwa in der Mitte des Bodens 3 ist ein den Wasserzulauf bildender Kaltwasseranschluß 6 vorgesehen. An der oberen Wandung 4 ist etwa bei deren höchsten Stelle 7 ein Warmwasseranschluß 8 angeordnet, der der Entnahme von Brauchwasser aus dem Brauchwasservorrat dient. Der Warmwasseranschluß 8 ist über eine Abzweigung 9 an eine elektrische Zirkulationspumpe 11 angeschlossen, die zu einem im unteren Drittel des Brauchwasserbehälters 2 angeordneten Zirkulationsanschluß 12 führt.

In Höhe des Zirkulationsanschlusses 12 ist in den Innenraum 5 des Brauchwasserbehälters 2 ein aus im wesentlichen vertikal stehenden Rohrschlangen 14, 15 bestehendes Dampfheizbündel 16 angeordnet. Die Rohrschlangen 14, 15 sind an ihrem jeweiligen oberen Ende mit einer nach außen schräg ansteigenden Rohrleitung 17 nach außen geführt. Das Volumen des jeweiligen oberen Bereiches der Rohrschlangen 14, 15 und der das Volumen der Rohrleitung 17 sind im Vergleich zu dem Gesamtvolumen des Dampfheizbündels 16 gering gehalten. Die Rohrleitung 17 steht über einen schräg angeordneten Bündelblockflansch 18 mit einer wärmeisolierten Dampfzuleitung 19 in Verbindung. Die jeweiligen unteren Enden der Rohrschlangen 14, 15 sind an eine mit Gefälle nach außen führende Kondensatleitung 21 angeschlossen, die den Brauchwasserbehälter 2 etwas oberhalb seines Bodens 3 verläßt. Die Kondensatleitung 21 ist über einen unteren Bündelblockflansch 22 an eine Kondensatableitung 23 angeschlossen.

Im Bereiche der Kondensatleitung 21 ist zur vorrangigen Erwärmung des Brauchwasservorrates mit Kondensatwärme aus einer Ferndampfleitungsentwässerung 25 ein Warmwasserheizbündel 26 angeordnet. Das Warmwasserheizbündel 26 weist miteinander in Verbindung stehende Wärmeübertragerrohre 27, 28, 29 auf. Das Wärmeübertragerrohr 27 liegt weiter oben und ist an den Vorlauf angeschlossen. Das Wärmeübertragerrohr 29 liegt weiter unten und ist an den Rücklauf angeschlossen.

Das Wärmeübertragerrohr 27 ist über einen Flansch 30 sowie ein motorbetätigtes Zweiwegeventil 31 an die Ferndampfleitungsentwässerung 25 angeschlossen. Das Wärmeübertragerrohr 29 ist ebenfalls über einen Flansch 32 mit einer Entwässerungsleitung 33 verbunden, die außerdem über ein Umgehungsrohr 34 mit dem Zweiwegeventil 31 in Verbindung steht.

Das Warmwasserheizbündel 26 ist über einen seitlich an dem Brauchwasserbehälter 2 vorgesehenen Halsstutzen 36 auswechselbar und abgedichtet an dem Brauchwasserbehälter 2 befestigt.

Ist die Solltemperatur geringer als die Temperatur des Ferndampfleitungskondensates, oder schwankt dessen Temperatur, kann die Regulierung des Wärmeeintrages über das Warmwasserheizbündel 26 erforderlich sein. Dazu ist im oberen Bereich des Brauchwasserbehälters 2, nahe bei der oberen Wandung 4 ein Temperaturwächter 38 vorgesehen, der über einen Stellmotor 37 das Zweiwegeventil 31 umschaltet. Der Temperaturwächter 38 ist die Solltemperatur von bspw. 80°C eingestellt. Wird diese Temperatur erreicht oder überschritten, schaltet der Temperaturwächter 38 das Zweiwegeventil 31 derart um, daß das Ferndampfleitungskondensat über das Umgehungsrohr 34 an dem Warmwasserheizbündel 26 vorbei geleitet wird.

Zur Steuerung des von dem Dampfheizbündel 16 ausgehenden Wärmeeintrages in das Brauchwasser, ist eine Regeleinrichtung 40 vorgesehen. Die Regeleinrichtung 40 weist ein in der Kondensatableitung 23 liegendes, elektrisch betätigtes Kondensatventil 41 mit einem Stellmotor 42 sowie einen Thermostaten 43 und einen Sollwerttemperaturgeber 44 auf.

Das Kondensatventil 41 ist in seinem Durchlaß stetig veränderbar, so daß es den Durchfluß sowohl mehr oder weniger drosseln als auch ganz unterbinden kann. Das Kondensatventil 41 bzw. dessen Stellmotor 42 wird von dem Thermostaten 43 sowie von dem Sollwerttemperaturgeber 44 gesteuert.

Der zur Messung der Brauchwassertemperatur vorgesehene Sollwerttemperaturgeber 44 ist seitlich etwa in der Mitte des Brauchwasserbehälters 2, und zwar oberhalb des Zirkulationsanschlusses 12, jedoch unterhalb des Temperaturwächters 38 angeordnet. Der Sollwerttemperaturgeber 44 ist auf die Solltemperatur von 80°C eingestellt. Wenn diese erreicht ist, gibt der Sollwerttemperaturgeber 44 ein Signal an das Kondensatventil 41 bzw. dessen Stellmotor 42, so daß das Kondensatventil 41 schließt.

Der Thermostat 43 ist in der Kondensatableitung 23 zwischen dem Bündelblockflansch 22 und dem Kondensatventil 41 angeordnet und mißt somit die Temperatur des aus dem Dampfheizbündel 16 abgeleiteten Kondensats. Der Thermostat 43 ist auf eine wesentlich niedrigere Temperatur, nämlich auf 40°C eingestellt. Überschreitet das in der Kondensatableitung 23 abfließende Kondensat diese Temperatur, schließt der Thermostat 43 über den Stellmotor 42 das Kondensatventil 41, oder verringert zumindest dessen Durchfluß solange, bis die 40°C wieder erreicht sind.

Zur Sicherung des Warmwasserbereiters 1 und zum Abschalten desselben bei Elektroenergieausfall oder bei Ausfall der Stadtwasserversorgung ist in der Dampfzuleitung 19 ein Dampfventil 46 angeordnet. Das Dampfventil 46 ist über ein elektrisch betätigtes Steuerventil 47 mit einer wasserdruckführenden Leitung 48 verbunden. Das Steuerventil ist offen, wenn Elektroenergie vorhanden ist, d.h. wenn Spannung anliegt, und ansonsten geschlossen. Zum Schutz des Warmwasserbereiters 1 gegen Überhitzung ist im Bereiche der oberen Wandung 4 ein Sicherheitstemperaturbegrenzer 49 mit einem Einstellbereich von 10 ... 110°C vorgesehen, der beim Überschreiten der maximal zulässigen Temperatur in dem Innenraum 5 des Brauchwasserbehälters 2 die Stromzufuhr zu dem Steuerventil unterbricht, wodurch das Steuerventil 47 und das Dampfventil 46 schließen. Der Sicherheitstemperaturbegrenzer 49 ist auf 90°C eingestellt und kippt bei Erreichen des eingestellten Temperaturgrenzwertes in einen Aus-Zustand und läßt sich ausschließlich mit einem speziell dafür vorgesehenen Werkzeug wieder einschalten.

Zusätzlich kann der Sicherheitstemperaturbegrenzer 49 mit dem Kondensatventil 41 sowie dem Zweiwegeventll verbunden sein, um diese bei Überhitzung ebenfalls zu schließen.

Der insoweit beschriebene Warmwasserbereiter erwärmt das Brauchwasser auf die nachfolgend beschriebene Weise:

Zu Beginn, d.h. bei der Inbetriebnahme des Warmwasserbereiters 1 ist der Innenraum 5 des Brauchwasserbehälters 2 vollständig mit Kaltwasser gefüllt. An der Ferndampfleitungsentwässerung 25 steht Kondensat mit einer Temperatur von ungefähr 80°C an und durchströmt das Warmwasserheizbündel 26. Es stehen sowohl Wasserdruck in der Leitung 48 als auch elektrische Spannung an dem Steuerventil 47 an, das Dampfventil 46 ist somit offen. Das Dampfheizbündel 16 ist bis in die senkrechte Dampfzuleitung 19 mit ausgekühltem Kondensat überschwemmt. Das Kondensatventil 41 ist offen. Der unter Druck stehende Dampf drückt das ausgekühlte Kondensat aus dem Dampfheizbündel 16 und strömt in die freiwerdenden Rohrschlangen 14, 15.

Der Dampf beginnt sofort an den kalten Wandungen der Rohrschlangen 14, 15 zu kondensieren. Das entstehende Kondensat sammelt sich in der Kondensatleitung 21, wo es weiter auskühlt. Es verläßt das Dampfheizbündel über die Kondensatableitung 23. Der Thermostat 42 überwacht dabei die Temperatur des ausfließenden Kondensats. Überschreitet die Kondensattemperatur den eingestellten Wert von 40°C, gibt der Thermostat 42 ein entsprechendes Signal an den Stellmotor 42, der das Kondensatventil 41 schließt oder dessen Durchfluß drosselt. Der über die Dampfzuleitung 19 nachströmende Dampf kondensiert weiter in den Rohrschlangen 14, 15, die von der Kondensatleitung 21 aus beginnend allmählich mit Kondensat geflutet werden, wobei der kondensierende Dampf über die Wandungen der Rohrschlangen 14, 15 seine Wärme an das umgebende Brauchwasser abgibt.

Das in dem Dampfheizbündel 16 befindliche Kondensat kühlt in den Rohrschlangen 14, 15 weiter aus. Der Thermostat 42 schließt das Kondensatventil 41 jedoch nur dann nicht, wenn das in der Kondensatableitung 23 stehende Kondensat die eingestellte Temperatur von 40° C unterschritten hat. Solange das in dem Innenraum 5 befindliche Brauchwasser noch kalt ist, kühlt das Kondensat sehr schnell aus. Der Thermostat 42 regelt das Kondensatventil 41 gerade so weit auf, daß das abfließende Kondensat die genannte Temperatur von 40°C nicht überschreitet.

Das in dem Dampfheizbündel 16 ansteigende Kondensat steht unter Dampfdruck und wird dadurch ohne Zuhilfenahme von Pumpen oder dergleichen in das nicht weiter dargestellte äußere System zurückgeführt.

Durch das Überwachen der Temperatur des ausfließenden Kondensats wird verhindert, daß bei schwankenden Dampfdrücken zuviel Kondensat aus dem Dampfheizbündel 16 gedrückt und damit zuviel Heizfläche frei wird.

Währenddessen gibt das von der Ferndampfleitungsentwässerung 25 stammenden Kondensat über das Warmwasserheizbündel 26 seine Wärme an das Brauchwasser ab. Das Kondensat verläßt das Warmwasserheizbündel 26 abgekühlt über das Wärmeübertragungsrohr 29, das unterhalb des Wärmeübertragungsrohr 27 angeordnet ist, und somit stets mit den noch am wenigsten erwärmten Schichten des Brauchwassers in Berührung steht.
Da zuströmendes Kaltwasser immer zuerst mit dem Warmwasserheizbündel 26 in Berührung kommt, bewirkt dieses eine Vorerwärmung des Brauchwassers. Das Dampfheizbündel 16 wird deshalb von vorgewärmten Brauchwasser umgeben, so daß die Temperaturspreizung zwischen dem Dampfheizbündel 16 und dem Brauchwasser und somit die Neigung zum Verkrusten der Rohrschlangen 14, 15 gering bleibt. In dem Brauchwasserbehälter stellt sich eine Temperaturschichtung mit einem relativ kalten Bereich in der Nähe des Bodens 3 ein. In dem weiter oben, bei dem Dampfheizbündel 16 liegenden Bereich befindet sich bereits vorgewärmtes Brauchwasser.

Durch die Heizwirkung des Dampfheizbündels 16 und des Warmwasserheizbündels 26 erwärmt sich das in dem Innenraum 5 stehende Brauchwasser zunehmend. Dabei sorgt der von der Zirkulationspumpe 11 über den Warmwasseranschluß 8 und den Zirkulationsanschluß 12 aufrecht erhaltenen Kreislauf dafür, daß das in der oberen Hälfte bis in den oberen zwei Dritteln des Innenraumes 5 befindliche Brauchwasser des Brauchwasserbereiters 2 ständig durchmischt wird. Es stellt sich dadurch in dem betreffenden Teil des Innenraumes 5 eine relativ gleichmäßige Wärmeverteilung ein.

Erreicht das Brauchwasser in der oberen Hälfte des Innenraumes 5 die an dem Sollwerttemperaturgeber 44 eingestellte Temperatur, gibt dieser ein Signal an den Stellmotor 42, der das Kondensatventil 41 schließt. Die ohnehin mit schon weitgehend mit Kondensat gefluteten Rohrschlangen 14, 15 beinhalten in ihrem jeweiligen oberen Teil noch eine gewisses, jedoch kleines Dampfvolumen, das nun kondensiert. Die dadurch verursachte Nacherwärmung des Brauchwassers ist wegen der kleinen Dampfmenge gering. Die Rohrschlangen 14, 15 werden nun vollends mit Kondensat geflutet und damit als Heizfläche unwirksam.

Auch wenn die Brauchwassertemperatur auch in dem unteren Bereiche des Brauchwasserbehälters 2 den an dem Thermostat 42 eingestellten Wert überschreitet, kann das in den Kondensatleitung 21 stehende Kondensat nicht mehr soweit abgekühlt werden, daß seine Temperatur den entsprechenden Grenzwert unterschreitet. Demzufolge bleibt das Kondensatventil 41 geschlossen; das Dampfheizbündel 16 ist zu 100 % mit Kondensat geflutet. Die weitere Erwärmung bzw. das Warmhalten des Brauchwassers erfolgt nun ausschließlich über das Warmwasserheizbündel 26. Selbst wenn über den Warmwasseranschluß 8 Brauchwasser entnommen wird, und demzufolge an dem Kaltwasseranschluß 26 Kaltwasser zufließt, kommt dasselbe zunächst mit dem Warmwasserheizbündel 26 in Berührung. Wenn die Brauchwasserentnahme und damit der Zustrom an Kaltwasser ein gewisses Maß nicht übersteigt, reicht die Erwärmung durch das Warmwasserheizbündel 26 aus. Es wird demnach kein weiterer Dampf verbraucht, sondern lediglich die in dem Ferndampfleitungsentwässerungskondensat ohnehin enthaltene Restwärme in Vorrangschaltung benutzt.

Bei größerer Warmwasserentnahme in kurzer Zeit strömt auch relativ viel Kaltwasser an dem Kaltwasseranschluß 6 in den Innenraum 5 ein. Das Kaltwasser füllt dabei den Innenraum 5 von unten her allmählich ansteigend, bis es den Sollwerttemperaturgeber 44 erreicht. Damit wird die an dem Sollwerttemperaturgeber 44 eingestellte Brauchwassertemperatur unterschritten. Dieser gibt über den Stellmotor 42 das Kondensatventil 41 frei, so daß der Dampfdruck Kondensat aus dem Dampfheizbündel 16 herausdrückt, wodurch Heizfläche frei wird. Der Thermostat 42 begrenzt jedoch auch jetzt über den Stellmotor 42 und das von diesem betätigte Kondensatventil 41 den Abfluß von Kondensat, sobald dieses die eingestellte Temperatur von 40°C überschreitet. Somit wird vermieden, daß zuviel Heizfläche frei wird, wodurch das Dampfheizbündel zu heiß würde. Ist in dem Innenraum 5 die an dem Sollwerttemperaturgeber 44 eingestellte Temperatur erreicht, schließt dieser über den Stellmotor 42 das Kondensatventil 41 ganz. Das Dampfheizbündel 16 ist damit wieder inaktiv.

Lediglich wenn die in dem Innenraum 5 von dem Brauchwasser erreichte Temperatur, die an dem Temperaturwächter 38 eingestellte Grenztemperatur überschritten hat, wird das Zweiwegeventil 31 von dem Stellmotor 37 umgeschaltet, so daß das von der Ferndampfleitungsentwässerung 25 ankommende Kondensat über das Umgehungsrohr 34 an dem Warmwasserbereiter 1 vorbeigeleitet wird.

Ist der Warmwasserbereiter 1 in Betrieb während die Wasserversorgung ausfällt, schließt das Dampfventil 46, so daß eine Überhitzung ausgeschlossen ist. Fällt hingegen die Elektroenergieversorgung aus, schließt das Steuerventil 47, wodurch das Dampfventil 46 ebenfalls geschlossen wird. Sollte jedoch durch einen anderweitigen Fehler die Temperatur in dem Innenraum 5 ein maximal zulässiges Maß bspw. 90°C übersteigen, unterbricht der Sicherheitstemperaturbegrenzer 49 die Stromzufuhr für das Steuerventil 47, das daraufhin schließt, und nachfolgend das Dampfventil 46 abschaltet. Auch in diesem Falle ist die weitere Wärmezufuhr über die Dampfzuleitung 19 gesperrt.

## Patentansprüche

1. Verfahren zum Erwärmen von Brauchwasser,
bei dem in Warmwasser enthaltene Wärmeenergie über ein Warmwasserheizbündel auf das zu erwärmende Brauchwasser übertragen wird,
dadurch gekennzeichnet,
daß in dem Brauchwasser eine Temperaturschichtung mit einem wärmeren und einem darunter liegenden kälteren Bereich erzeugt wird,
daß zum Erwärmen des in dem wärmeren Bereich befindlichen Brauchwassers Dampf verwendet wird,
daß die von dem Dampf in das Brauchwasser eingeführte Wärmemenge durch geregelten Auslaß des Kondensats und somit durch Kondensatanstau geregelt wird,
daß das Warmwasser zum Erwärmen bzw. Vorwärmen des in dem kälteren Bereich befindlichen Brauchwassers genutzt wird und
daß das Warmwasser in Vorrangschaltung zum Erwärmen des Brauchwassers genutzt wird.

2. Verfahren nach Anspruch 1, dadurch gekennzeichnet, daß das Warmwasser Restwärme enthaltendes Kondensat ist.

3. Verfahren nach Anspruch 2, dadurch gekennzeichnet, daß als Kondensat Ferndampfleitungsentwässerungskondensat verwendet wird.

4. Verfahren nach Anspruch 1, dadurch gekennzeichnet, daß das durch den kondensierenden Dampf entstehende Kondensat zum Erwärmen des Brauchwassers Verwendung findet.

5. Warmwasserbereiter zur Erwärmung und Speicherung von Brauchwasser,
mit einem einen Warmwasseranschluß (8) sowie einen Kaltwasseranschluß (6) aufweisenden Brauchwasserbehälter (2), der einen Innenraum (5) umschließt,
mit einer an dem Brauchwasserbehälter (5) angeordneten, mit dem Brauchwasser in Verbindung stehenden Warmwasser-Heizvorrichtung,
mit einer an dem Brauchwasserbehälter angeordneten Dampf-Heizvorrichtung,
dadurch gekennzeichnet,
daß die Dampf-Heizvorrichtung ein im Kondensatanstau betreibbares Dampfheizbündel (14, 15) enthält, das in dem Innenraum (5) angeordnet ist,
daß das Dampfheizbündel (14, 15) ausgangsseitig an eine Regeleinrichtung (40) angeschlossen ist, die ein Ventil (41) zur Bemessung des Wärmeeintrages in den Brauchwasserbehälter (5) durch Steuerung des Kondensatflusses aufweist,
daß die Warmwasser-Heizvorrichtung ein Warmwasserheizbündel (26) ist, das in dem Innenraum (5) des Brauchwasserbehälters (2) angeordnet ist, und
daß Mittel vorgesehen sind, um das Warmwasserheizbündel (26) in Vorrangschaltung zu betreiben.

6. Warmwasserbereiter nach Anspruch 5, dadurch gekennzeichnet, daß das Warmwasserheizbündel (26) an ein den Warmwasservorlauf bildendes Ende der Ferndampfleitungsentwässerung (25) sowie an eine den Rücklauf oder Abfluß bildende Leitung (33) angeschlossen ist.

7. Warmwasserbereiter nach Anspruch 5, dadurch gekennzeichnet, daß das Dampfheizbündel (16) und das Warmwasserheizbündel (26) in einem bezogen auf die Wirkungsrichtung der Schwerkraft unteren Teil des Innenraumes (5) des Brauchwasserbehälters (2) angeordnet sind.

8. Warmwasserbereiter nach Anspruch 5, dadurch gekennzeichnet, daß das Dampfheizbündel (16) oberhalb des Warmwasserheizbündels (26) angeordnet ist.

9. Warmwasserbereiter nach Anspruch 5, dadurch gekennzeichnet, daß der oberhalb des Dampfheizbündels (16) gelegene Abschnitt des Innenraumes (5) der größere Teil des Gesamtvolumens des Innenraumes (5) ist.

10. Warmwasserbereiter nach Anspruch 5, dadurch gekennzeichnet, daß der Brauchwasserbehälter (2) unterhalb halber Höhe, bei dem Dampfheizbündel (16) einen Anschluß (12) aufweist, der über eine Zirkulationspumpe (11) mit dem Warmwasseranschluß (8) verbunden ist.

11. Warmwasserbereiter nach Anspruch 5, dadurch gekennzeichnet, daß das Dampfheizbündel (16) mehrere im wesentlichen senkrecht stehende Übertragungsrohre enthält, die als Rohrschlangen (14, 15) ausgebildet sind.

12. Warmwasserbereiter nach Anspruch 5, dadurch gekennzeichnet, daß das zu der Regeleinrichtung (40) gehörige Ventil (41) von einem Stellmotor (42) betätigt ist.

13. Warmwasserbereiter nach den Ansprüchen 5 und 12, dadurch gekennzeichnet, daß die Regeleinrichtung (40) einen etwa auf halber Höhe des Brauchwasserbehälters (2) angeordneten Sollwerttemperaturgeber (44) aufweist, der ein erstes Steuersignal zur Steuerung des Kondensatventils (41) abgibt, derart, daß der Durchlaß des Kondensatventils (41) verringert wird, wenn die Temperatur an dem Sollwerttemperaturgeber (44) einen Grenzwert übersteigt, und daß der Durchlaß vergrößert wird, wenn der Grenzwert unterschritten ist.

14. Warmwasserbereiter nach den Ansprüchen 5 und 12, dadurch gekennzeichnet, daß die Regeleinrichtung (40) einen in der Kondensatableitung (23) zwischen dem Kondensatventil (41) und dem Dampfheizbündel (16) vorgesehenen Thermostattemperaturfühler (43) aufweist, der ein zweites Steuersignal zur Steuerung des Kondensatventils (41) abgibt, derart, daß der Durchlaß des Kondensatventiles (41) bei zunehmender Temperatur an dem Thermostattemperaturfühler (43) verringert und bei abnehmender Temperatur vergrößert wird.

15. Warmwasserbereiter nach Anspruch 6, dadurch gekennzeichnet, daß der Warmwasservorlauf über einen Pfad eines motorgesteuerten Zweiwegeventiles (31) und ein Umgehungsrohr (34) mit der den Rücklauf bildenden Leitung (33) verbindbar ist.

16. Warmwasserbereiter nach den Ansprüchen 5 und 15, dadurch gekennzeichnet, daß im oberen Bereich des Brauchwasserbehälters (2) ein Temperaturwächter (38) vorgesehen ist, der das Zweiwegeventil (32) steuert, so daß beim Überschreiten der Grenztemperatur an dem Temperaturwächter (38) das Umgehungsrohr (34) zwischen Warmwasservorlauf und Rücklauf freigegeben ist.

17. Warmwasserbereiter nach Anspruch 5, dadurch gekennzeichnet, daß das Dampfheizbündel (16) mit der Dampfzuleitung (19) über ein druckbetätigtes Dampfventil (46) verbunden ist, das mit dem Brauchwassernetz verbunden ist und das bei Druckabfall im Brauchwassernetz geschlossen ist.

18. Warmwasserbereiter nach Anspruch 17, dadurch gekennzeichnet, daß das Dampfventil (46) über ein elektrisch betätigtes Steuerventil (47), das in spannungsfreiem Zustand geschlossen ist, mit dem Brauchwassernetz verbunden ist.

19. Warmwasserbereiter nach Anspruch 18, dadurch gekennzeichnet, daß in dem oberen Bereich des Brauchwasserbehälters (2) ein Sicherheitstemperaturbegrenzer (49) vorgesehen ist, der bei Überschreiten einer Grenztemperatur in einen Aus-Zustand kippt und das Steuerventil (47) spannungsfrei schaltet.

20. Warmwasserbereiter nach Anspruch 19, dadurch gekennzeichnet, daß der Sicherheitstemperaturbegrenzer (49) ausschließlich mit einem dafür vorgesehenen Werkzeug von seinem Aus-Zustand in den Ein-Zustand bringbar ist.

## Claims

1. Process for heating industrial water,
in which thermal energy contained in hot water is transferred to the industrial water to be heated via a hot water heating pack,
characterised in that
a layering of temperature is generated in the industrial water with a hotter region and a colder region located below it;
that steam is used to heat the industrial water located in the hotter region;
that the amount of heat introduced into the industrial water by the steam is controlled by controlled discharge of the condensate and thus by accumulation of condensate;
that the hot water is used for heating or pre-heating the industrial water located in the colder region; and
that the hot water is used in priority sequence to heat the industrial water.

2. Process according to Claim 1, characterised in that the hot water is condensate containing residual heat.

3. Process according to Claim 2, characterised in that condensate from long-distance steam pipeline drainage is used as condensate.

4. Process according to Claim 1, characterised in that the condensate formed by the condensing steam is used to heat the industrial water.

5. Hot water plant for heating and storing industrial water,
with an industrial water tank (2) having a hot water connection (8) and a cold water connection (6) and enclosing an inner area (5),
with a hot water heater, which is arranged on the industrial water tank (5) and is connected to the industrial water,
with a steam heater disposed on the industrial water tank,
characterised in that
the steam heater contains a steam heating pack (14, 15), which may be operated via condensation accumulation and is disposed in the inner area (5);
that the steam heating pack (14, 15) is connected on the outlet side to a control means (40), which has a valve (41) for allotting the heat input into the industrial water tank (5) by controlling the flow of condensate;
that the hot water heater is a hot water heating pack (26) which is disposed in the inner area (5) of the industrial water tank (2); and
that means are provided to operate the hot water heating pack (26) in priority sequence.

6. Hot water plant according to Claim 5, characterised in that the hot water heating pack (26) is connected to one end of the long-distance steam pipeline drainage system (25) forming the hot water forward flow and also to a pipe (33) forming the return or discharge flow.

7. Hot water plant according to Claim 5, characterised in that the steam heating pack (16) and the hot water heating pack (26) are disposed in a lower portion of the inner area (5) of the industrial water tank (2) with respect to the direction of action of gravity.

8. Hot water plant according to Claim 5, characterised in that the steam heating pack (16) is disposed above the hot water heating pack (26).

9. Hot water plant according to Claim 5, characterised in that the section of the inner area (5) located above the steam heating pack (16) is the larger portion of the overall volume of the inner area (5).

10. Hot water plant according to Claim 5, characterised in that below half level near the steam heating pack (16), the industrial water tank (2) has a connection (12), which is connected to the hot water connection (8) via a circulation pump (11).

11. Hot water plant according to Claim 5, characterised in that the steam heating pack (16) contains several transfer pipes standing essentially perpendicular which are constructed as coiled pipes (14, 15).

12. Hot water plant according to Claim 5, characterised in that the valve (41) belonging to the control means (40) is operated by a servomotor (42).

13. Hot water plant according to Claims 5 and 12, characterised in that the control means (40) has a desired temperature indicator (44), which is disposed approximately at half level of the industrial water tank (2) and which emits a first control signal for controlling the condensate valve (41) so that the passage of the condensate valve (41) is reduced when the temperature at the desired temperature indicator (44) exceeds a limit value, and that the passage is increased when the limit value is not reached.

14. Hot water plant according to Claims 5 and 12, characterised in that the control means (40) has a thermostat temperature sensor (43), which is provided in the condensate discharge pipe (23) between the condensate valve (41) and the steam heating pack (16) and which emits a second control signal to control the condensate valve (41) so that the passage of the condensate valve (41) is reduced when the temperature at the thermostat temperature sensor (43) increases, and is increased when the temperature decreases.

15. Hot water plant according to Claim 6, characterised in that the hot water forward flow may be connected to the pipe (33) forming the return flow via a path of a motor-controlled two-way valve (31) and a bypass pipe (34).

16. Hot water plant according to Claims 5 and 15, characterised in that a temperature monitor (38) which controls the two-way valve (32) is provided in the upper region of the industrial water tank (2) so that when the limit temperature at the temperature monitor (38) is exceeded, the bypass pipe (34) between the hot water forward flow and return flow is released.

17. Hot water plant according to Claim 5, characterised in that the steam heating pack (16) is connected to the steam feed pipe (19) via a pressure-operated steam valve (46) which is connected to the industrial water network and is closed when the pressure drops in the industrial water network.

18. Hot water plant according to Claim 17, characterised in that the steam valve (46) is connected to the industrial water network via an electrically operated control valve (47) which is closed when free from voltage.

19. Hot water plant according to Claim 18, characterised in that in the upper region of the industrial water tank (2), a safety temperature restrictor (49) is provided which flips into an off-status when a limit temperature is exceeded and switches the control valve (47) free from voltage.

20. Hot water plant according to Claim 19, characterised in that the safety temperature restrictor (49) may be brought into the on-status from its off-status solely by a tool provided for that purpose.

## Revendications

1. Procédé de réchauffage d'eau sanitaire,
selon lequel de l'énergie calorifique contenue dans de l'eau chaude est transmise à l'eau sanitaire par l'intermédiaire d'un faisceau de chauffage à eau chaude,
caractérisé
par le fait que l'on produit, dans l'eau sanitaire, un étagement de la température avec une zone plus chaude et une zone plus froide située en-dessous de la première,
par le fait que l'on utilise de la vapeur pour réchauffer l'eau sanitaire qui se trouve dans la zone plus chaude,
par le fait que l'on règle la quantité de chaleur apportée à l'eau sanitaire par la vapeur par la purge régulée du condensat et ainsi par accumulation de condensat
par le fait que l'on utilise l'eau chaude pour réchauffer ou pour préchauffer l'eau sanitaire qui se trouve dans la zone la plus froide et
par le fait que que l'on utilise de l'eau chaude en préchauffage, pour réchauffer l'eau sanitaire.

2. Procédé selon la revendication 1, caractérisé par le fait que l'eau chaude est du condensat contenant de la chaleur résiduelle.

3. Procédé selon la revendication 2, caractérisé par le fait que l'on utilise comme condensat le condensat de purge de conduites de vapeur de chauffage urbain.

4. Procédé selon la revendication 1, caractérisé par le fait que l'on utilise le condensat produit par la condensation de la vapeur pour le chauffage de l'eau sanitaire.

5. Dispositif de préparation d'eau chaude pour le réchauffage et le stockage d'eau sanitaire,
avec un ballon (2) à eau sanitaire pourvu d'un raccord (8) d'eau chaude et d'un raccord (6) d'eau froide, qui entoure une chambre (5) intérieure,
avec un dispositif de chauffage à eau chaude qui est disposé dans le ballon (5) à eau sanitaire et est en contact avec l'eau sanitaire,
avec un dispositif de chauffage à vapeur disposé dans le ballon (5) à eau sanitaire,
caractérisé
par le fait que le dispositif de chauffage à vapeur comprend un faisceau de chauffage (14, 15) pouvant fonctionner avec accumulation de condensat, qui est disposé dans la chambre (5) intérieure,
par le fait que le faisceau (14, 15) de chauffage à vapeur est connecté côté sortie à un dispositif de réglage (40) qui comporte une soupape (41) de dosage de l'apport de chaleur dans le ballon (5) d'eau sanitaire par contrôle du débit de condensat,
par le fait que le dispositif de chauffage à eau chaude est un faisceau (26) de chauffage à eau chaude qui est disposé dans la chambre (5) intérieure du ballon (2) à eau sanitaire et
par le fait que des moyens sont prévus pour faire fonctionner le faisceau de chauffage à eau chaude en préchauffage.

6. Dispositif de préparation d'eau chaude selon la revendication 5, caractérisé par le fait que le faisceau (26) de chauffage à eau chaude est connecté à une extrémité du système de purge (25) de la conduite de vapeur de chauffage urbain, qui constitue l'entrée d'eau chaude, ainsi qu'à une conduite (33) qui constitue le retour ou la sortie.

7. Dispositif de préparation d'eau chaude selon la revendication 5, caractérisé par le fait que le faisceau (16) de chauffage à vapeur et le faisceau (26) de chauffage à eau chaude, rapporté à la direction d'action de la pesanteur, sont disposés dans une zone inférieure de la chambre (5) intérieure du ballon (2) à eau sanitaire.

8. Dispositif de préparation d'eau chaude selon la revendication 5, caractérisé par le fait que le faisceau (16) de chauffage à vapeur est disposé au-dessus du faisceau (26) de chauffage à eau chaude.

9. Dispositif de préparation d'eau chaude selon la revendication 5, caractérisé par le fait que la partie de la chambre (5) intérieure située au-dessus du faisceau (16) de chauffage à vapeur représente la partie la plus importante du volume total de la chambre (5) intérieure.

10. Dispositif de préparation d'eau chaude selon la revendication 5, caractérisé par le fait que le ballon (2) à eau sanitaire comporte, en-dessous de la moitié de la hauteur, sur le faisceau (16) de chauffage à vapeur, un raccord (12) qui est connecté au raccord (8) d'eau chaude par l'intermédiaire d'une pompe de circulation (11).

11. Dispositif de préparation d'eau chaude selon la revendication 5, caractérisé par le fait que le faisceau (16) de chauffage à vapeur comprend plusieurs tubes de transfert disposés sensiblement verticalement, qui sont conformés en serpentins (14, 15).

12. Dispositif de préparation d'eau chaude selon la revendication 5, caractérisé par le fait que la soupape (41) faisant partie du dispositif de réglage (40) est actionnée par un servomoteur (42).

13. Dispositif de préparation d'eau chaude selon les revendications 5 et 12, caractérisé par le fait que le dispositif de réglage (40) comporte un ajusteur de température de consigne (44) qui est disposé sensiblement à mi-hauteur du ballon à eau sanitaire (2) et délivre un premier signal de commande pour la commande de la soupape (41) à condensat de telle sorte que l'ouverture de la soupape (41) à condensat diminue lorsque la température au niveau de l'ajusteur de température de consigne (44) dépasse un seuil donné et augmente lorsque la température descend en-dessous d'un seuil donné.

14. Dispositif de préparation d'eau chaude selon les revendications 5 et 12, caractérisé par le fait que le dispositif de réglage (40) comporte une sonde de température thermostatique (43) qui est disposée dans la conduite (23) d'évacuation du condensat entre la soupape (41) à condensat et le faisceau (16) de chauffage à vapeur, laquelle sonde délivre un deuxième signal de commande, pour la commande de la soupape (41) à condensat, de telle sorte que l'ouverture de la soupape (41) à condensat diminue lorsque la température au niveau de la sonde (43) augmente et augmente lorsque la température diminue.

15. Dispositif de préparation d'eau chaude selon la revendication 6, caractérisé par le fait que l'entrée d'eau peut être connectée à la conduite (33) formant le retour par une branche de circuit qui comporte une vanne deux voies (31) motorisée et une conduite de dérivation (34).

16. Dispositif de préparation d'eau chaude selon l'une des revendications 5 à 15, caractérisé par le fait qu'il est prévu dans la partie supérieure du ballon (2) à eau sanitaire un contrôleur de température (38) qui commande la vanne deux voies (32) de telle sorte qu'en cas de dépassement de la température seuil au niveau du contrôleur de température (3 8), le passage dans la conduite de dérivation (34), entre l'entrée d'eau et le retour, est ouvert.

17. Dispositif de préparation d'eau chaude selon la revendication 5, caractérisé par le fait que le faisceau (16) de chauffage à vapeur est connecté à la conduite (19) d'alimentation en vapeur par l'intermédiaire d'une soupape (46) à vapeur commandée par pression qui est connectée au réseau d'eau sanitaire et qui en cas de chute de pression dans ledit réseau d'eau sanitaire, est fermée.

18. Dispositif de préparation d'eau chaude selon la revendication 17, caractérisé par le fait que la soupape (46) de vapeur est connectée au réseau d'eau sanitaire par l'intermédiaire d'une soupape de commande (47) actionnée électriquement qui est fermée en l'absence de tension.

19. Dispositif de préparation d'eau chaude selon la revendication 18, caractérisé par le fait qu'il est prévu, dans la partie supérieure du ballon (2) à eau sanitaire, un limiteur de température (49) de sécurité qui, en cas de dépassement d'un seuil de température, bascule en position de coupure et coupe la tension au niveau de la soupape de commande (47).

20. Dispositif de préparation d'eau chaude selon la revendication 19, caractérisé par le fait que le limiteur de température (49 ) de sécurité ne peut être amené de l'état ouvert à l'état fermé qu'au moyen d'un outil spécialement adapté.
